**Europäisches Patentamt**

**European Patent Office**

**Office européen des brevets**

(11) Publication number: **0 143 253**
**B1**

# EUROPEAN PATENT SPECIFICATION

(45) Date of publication of patent specification: **21.10.87**

(51) Int. Cl.⁴: **B 29 D 11/00** // B29L11:00

(21) Application number: **84111471.3**

(22) Date of filing: **26.09.84**

(54) Lens casting mold and process for using same in making an optical lens.

(30) Priority: **27.09.83 US 536430**

(43) Date of publication of application:
**05.06.85 Bulletin 85/23**

(45) Publication of the grant of the patent:
**21.10.87 Bulletin 87/43**

(84) Designated Contracting States:
**AT BE CH DE FR GB IT LI LU NL SE**

(56) References cited:
**US-A-3 408 429**
**US-A-3 555 126**
**US-A-3 841 598**
**US-A-4 155 962**
**US-A-4 188 353**
**US-A-4 252 753**
**US-A-4 285 890**
**US-A-4 307 046**
**US-A-4 347 198**

(73) Proprietor: **Barnes-Hind, Inc.**
**895 Kifer Road**
**Sunnyvale California (US)**

(72) Inventor: **Rostoker, Martin V.**
**12589 Utopia Way**
**San Diego California (US)**
Inventor: **Jakoski, John C.**
**13226 Silver Saddle Lane**
**Poway California (US)**

(74) Representative: **Brauns, Hans-Adolf, Dr. rer. nat. et al**
**Hoffmann, Eitle & Partner, Patentanwälte**
**Arabellastrasse 4**
**D-8000 Munich 81 (DE)**

Courier Press, Leamington Spa, England.

## Description

This invention relates to a method of making optical lenses, such as ophthalmic intraocular lenses, corneal implants and contact lenses and to a casting mold therefor.

Various methods are known for casting optical lenses from polymerizable materials using various molds and techniques.

In general, a mold is charged with monomers and the polymerization is initiated therein by a catalyst mixed in with the monomers. The mold in which the polymerization is initiated is designed to provide for the formation of at least one of the optical surfaces of the lens while the other optical surface is generated and subsequently finished after polymerization is completed; alternatively, both optical surfaces have been formed in the mold.

Notwithstanding the numerous advantages obtained by the application of these methods to produce high quality optical plastic lenses, some disadvantages exist awaiting correction. A major disadvantage experienced on the one hand with molding both optical surfaces of a lens is the imperfect formation of such surfaces as a result of air entrapment resulting in bubbles, and mold separation upon shrinkage of the monomers on polymerization. Often it is necessary to machine finish both the optical surfaces and the edge of the lens due to imperfections resulting from the application of the two-mold technique. On the other hand, the one-mold technique by which only one of the optical surfaces is produced on casting, while the other optical surface is machine finished, suffers from the disadvantage that the polymerized semi-finished plastic "button" is difficult to handle during the machine finishing operation, such as cutting with a lathe and polishing.

In US—A 4,188,353 a method of making plastic aspheric lenses by casting a liquid monomer in a container, polymerizing the monomer to form a solid having an aspheric optical surface formed within the container and cutting a second optical surface on the solid lens material with the container supporting the lens material during the cutting and polishing operation is disclosed.

The present invention provides a method by which a high quality optical plastic lens may be produced by using a mold capable of forming one of the optical surfalces (anterior, posterior and/or edge) while the other optical surface is generated.

The present invention also provides a mold capable of forming one of the optical surfaces on the polymerized lens blank or button, while the other optical surface is to be finished.

The present invention additionally provides a mold having means by which it is mounted on a precision mandrel such as a rod or bar for convenient handling and precision indexing during the subsequent process operations.

The present invention provides a casting mold for making an optical lens, the mold including an arbor having tubular top and bottom portions and a finished element having a predetermined surface separating said tubular top and bottom portions and forming a cup shaped container with said tubular top portion according to US—A—4,188,353 and is characterized in that said tubular bottom portion includes interior thread means for mounting said casting mold on a precision mandrel; and said bottom portion includes a pair of external precision tabs integral therewith to facilitate balancing and indexing the mold.

The invention also provides a process of making an optical lens which includes the steps of providing a casting mold including an arbor having tubular top and bottom portions, and a finished element having a predetermined surface separating said tubular top and bottom portions and forming a cup shaped container with said tubular top portion, filling said cup shaped container with a lens forming liquid, polymerizing said lens forming liquid to form a lens blank having one optical surface formed thereon by said finished element, and generating and finishing a subsequent optical surface in said lens blank according to US—A—4,188,353, which is characterized in that said tubular bottom portion includes interior thread means for mounting said casting mold in a precision mandrel, and a pair of precision tabs integral therewith to facilitate balancing and indexing the mold; and in that the process further includes the steps of mounting said casting mold on a threaded rod.

In accordance with the invention the internal thread on the tubular end portion functions as a means of attachment to the precision mandrel.

In casting an optical blank, the desired monomers and catalysts are injected into the casting. Upon polymerization, a solid blank or button is formed having an optical surface formed thereon by the convex or concave polished surface of the casting mold. To produce the second optical surface of the lens blank, the casting mold is mounted by its tubular end portion having internal thread therein on a threaded precision mandrel such as a bar or rod, and subsequent curves are then generated.

In the accompanying drawing:

Figure 1 is a perspective view of the lens casting mold.

Figure 2 is a top view of the casting mold of Fig. 1.

Figure 3 is a bottom view of the casting mold of Fig. 1.

Figure 4 is a sectional elevation view of the casting mold taken along the line 10—10 of Fig. 1.

The casting mold of the present invention is made of thermoplastic materials having the required strength and stability under polymerization conditions and which can be molded to have an optical quality surface. Suitable thermoplastic materials include polyolefins, such as polyethylene and polypropylene, nylons, such as Nylon 6 and Nylon 66, propylene copolymers, polysulfones, ethylene vinyl acetate and the like.

It is also within the purview of the present invention to make the bottom portion of the mold from metals or metal alloys. A main requirement in using these materials is strength and stability under the conditions of molding and forming an optical quality surface.

To produce the casting mold, conventional methods are used in which metal molds are fabricated by machining and polishing operations. The metal molds are then used in injection or compression molding machines to produce the casting molds. While the metal molds are reusable, the thermoplastic molds of the present invention are intended for a single use.

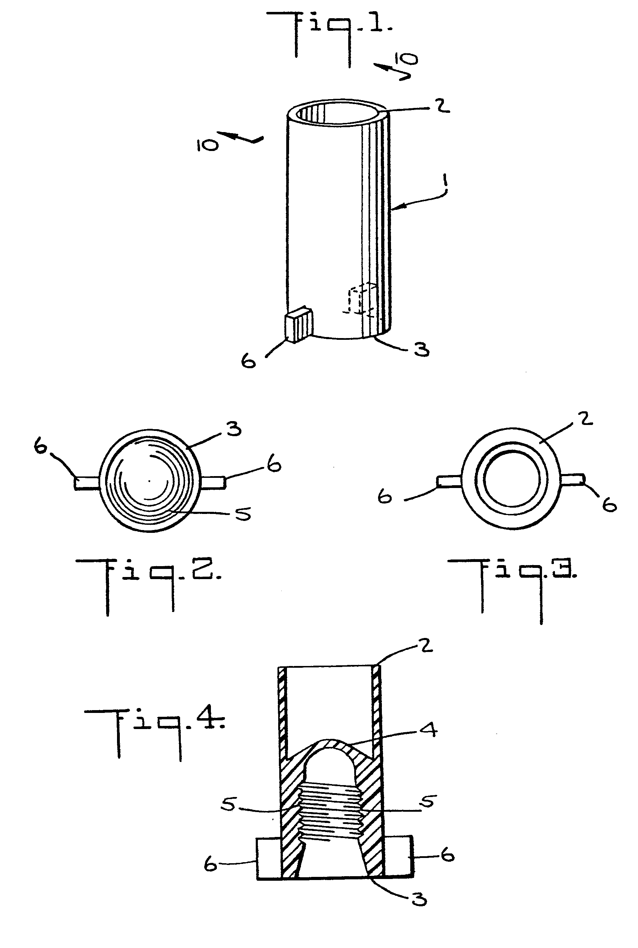

The casting mold 1 of Fig. 1 comprises an arbor having a tubular top end portion 2 and a tubular bottom end portion 3. Tubular top end portion 2 is separated from tubular bottom end portion 3 by element 4 having a pre-determined convex (or concave) finished surface which together with tubular top end portion 2 forms a cup-shape container to receive a polymerizable lens forming material. The surface of element 4 is pre-determined to comply with the optical requirements of the lens to be produced. The surface may be spherical or aspherical, toric, or any free curve or any combination thereof. In addition, optical prism may be obtained by adding and offset between the axis of the optical surface and the axis of the locating mechanism. Also, the size of the lens, according to whether a contact lens, intraocular lens, corneal implant, or an ophthalmic lens is desired, is varied by varying the size of the mold. In the illustrated embodiment tubular bottom end portion 3 is designed with a threaded interior 5 so that the casting mold may be mounted on a threaded precision mandrel which is an integral part of an instrument for generating subsequent surfaces. This generating of surfaces include lathing, grinding, or laser machining. It has been found that such a design greatly enhances both the quality of the lens and economy of production by facilitating precision generating of the subsequent optical surfaces in the lens blank. In the illustrated embodiment the casting mold 1 is also equipped with a pair of precision tabs or ears 6, integral with tubular bottom end portion 3, for balancing, indexing, and as a driving mechanism.

The lenses are made using a casting liquid of monomers, prepolymers and mixtures thereof are known in the art, such as acrylic esters, hydrophilic and hydrophobic monomer mixtures, silicone elastomers, cellulose esters and the like. Polymerization of the casting liquid is usually carried out with free radical catalysts under ambient or elevated temperatures depending on the chemical nature of the casting liquid.

The application of the lens casting mold of the present invention in a process for producing optical lenses follows.

A plurality of lens casting molds are placed on a holding tray of suitable design to securely hold the molds spaced from each other in an upright position. Stacked trays are carried either manually or moved on a conveyer belt between work stations. The pre-determined tasks at each work station may be carried out manually or automatically by a suitable device, apparatus or combinations thereof. The lens casting molds are first filled with the desired lens forming liquid and catalyst. Next, polymerization is initiated and completed under appropriate curing conditions which include curing in an oven or the use of other techniques such as radiation, including U.V. and microwave and the use of a bath with a heat transfer fluid, such as water and silicone oil. After curing, the lens blank held in the casting mold and, having one of the optical surfaces formed thereon by the curved polished bottom of the mold, is mounted on a lathe having a threaded precision mandrel and the second optical surface is generated therein.

Having the tubular end portion 3 abut the mandrel ensures a datum point so that a uniform lens thickness can be obtained from mold to mold regardless of the pre-determined finished surface.

In the process of generating subsequent optical surfaces, the lens is securely held by the lens mold and both the lens and the tubular portion of the lens mold are cut simultaneously. Each finished lens is placed back on the holding tray. The tray is then covered with a lid. The lenses can then be removed from the casting molds using various techniques including chemical and mechanical techniques, such as hydration. The lenses are inspected in customary manner known by the art, the used molds are discarded and the tray and lid are reused in the continuous operation.

It is therefore seen that the lens casting mold and the process of using same provides articles of manufacture for the optical industry, such as contact lenses, intraocular lenses, corneal implants, and ophthalmic lenses. The design of the lens casting mold allows convenient handling, precision indexing, and precision generation for producing high quality products and reducing processing time.

**Claims**

1. A casting mold for making an optical lens, the mold including an arbor having tubular top (2) and bottom portions (3), and a finished element (4) having a predetermined surface separating said tubular top and bottom portions and forming a cup shaped container with said tubular top portion, characterized in that said tubular bottom portion (3) includes interior thread means (5) for mounting said casting mold on a precision mandrel; and said bottom portion includes a pair of external precision tabs (6) integral therewith to faciltate balancing and indexing the mold.

2. The casting mold of Claim 1, characterized in that said predetermined separating surface (4) is convex.

3. The casting mold of Claim 1, characterized in that said predetermined separating surface (4) is concave.

4. The casting mold of Claim 1, characterized in that said predetermined separating surface (4) is spherical.

5. The casting mold of Claim 1, characterized in that said predetermined separating surface (4) is toric.

6. The casting mold of Claim 1, characterized in that said predetermined separating surface (4) is aspherical.

7. The casting mold of any one of the preceding claims, characterized in that said mold (1) is of a thermoplastic material.

8. The casting mold of Claim 7, characterized in that said thermoplastic material is selected from the group consisting of polyethylene, polypropylene, ethylene vinyl acetate, propylene copolymers, polysulfones and nylons.

9. The casting mold of any one of the preceding claims, characterized in that at least a part of said mold (1) is of metal.

10. The casting mold of any one of the preceding claims, characterized in that at least part of said mold (1) is of metal alloys.

11. A process of making an optical lens which includes the steps of providing a casting mold including an arbor having tubular top (2) and bottom portions (3), and a finished element having a predetermined surface separating said tubular top (2) and bottom portions (3) and forming a cup shaped container with said tubular top portion, filling said cup shaped container with a lens forming liquid, polymerizing said lens forming liquid to form a lens blank having one optical surface formed thereon by said finished element, and generating and finishing a subsequent optical surface in said lens blank, characterized in that said tubular bottom portion (3) includes interior thread means (5) for mounting said casting mold on a precision mandrel, and a pair of precision tabs (6) integral therewith to facilitate balancing and indexing the mold; and in that the process further includes the steps of mounting said casting mold on a threaded rod.

12. The process of Claim 11, characterized by generating and finishing said subsequent optical surface by cutting, grinding or laser machining.

13. The process of Claim 11 or 12, characterized in that said optical lens is an ophthalmic lens, a contact lens, an intraocular lens, or a corneal implant lens.

14. The process of any one of Claims 11 to 13, characterized in that said lens forming liquid is selected from the group consisting of hydrophilic monomers, hydrophobic monomers, catalysts, acrylic esters, silicone elastomers and cellulose esters.

15. The process of any one of Claims 11 to 14, wherein said finishing element consists of a convex polished element having a predetermined curvature, characterized by placing a plurality of said casting mold on a tray; filling each of said casting molds with said lens forming liquid; polymerizing and curing said lens forming liquid in said casting molds to form said lens blanks; mounting each of said casting molds on a threaded precision mandrel; mounting said casting molds with the precision mandrels on a device; machine cutting and polishing a second optical surface in each of said lens blank; removing each casting mold from said rods and placing it back to said tray; placing a lid over said tray to firmly hold the casting molds therein; dismounting said finished lenses from said casting molds; removing said lid from said tray; and inspecting said finished lenses.

16. The process of Claim 15, characterized in that said lens mold firmly holds said lens blank during the machine cutting and polishing the second optical surface therein and is being cut therewith.

**Patentansprüche**

1. Giessform zur Herstellung einer optischen Linse, wobei die Form einen Dorn mit einem rohrförmigen oberen Teil (2) und Bodenteil (3), ein zugerichtetes Element (4) mit einer vorbestimmten Oberfläche, welches den rohrförmigen oberen und Bodenteil voneinander trennt und einen becherförmig geformten Behälter mit dem rohrförmigen oberen Teil bildet, umfasst, dadurch gekennzeichnet, dass der rohrförmige Bodenteil (3) innere Gewindeeinrichtungen (5) zum Befestigen der Giessform auf einem Präzisionsdorn einschliesst und der Bodenteil ein Paar von äusseren Präzisionslaschen, die damit integriert sind und das Balancieren und Indexieren der Form erleichtern, einschliesst.

2. Giessform gemäss Anspruch 1, dadurch gekennzeichnet, dass die vorbestimmte abtrennende Oberfläche (4) konvex ist.

3. Giessform gemäss Anspruch 1, dadurch gekennzeichnet, dass die vorbestimmte abtrennende Oberfläche (4) konkav ist.

4. Giessform gemäss Anspruch 1, dadurch gekennzeichnet, dass die vorbestimmte abtrennende Oberfläche (4) kugelförmig ist.

5. Giessform gemäss Anspruch 1, dadurch gekennzeichnet, dass die vorbestimmte abtrennende Oberfläche (4) torisch ist.

6. Giessform gemäss Anspruch 1, dadurch gekennzeichnet, dass die vorbestimmte abtrennende Oberfläche (4) asphärisch ist.

7. Giessform gemäss Anspruch 1, dadurch gekennzeichnet, dass die Form (1) aus einem thermoplastischen Material besteht.

8. Giessform gemäss Anspruch 7, dadurch gekennzeichnet, dass das thermoplastische Material ausgewählt ist aus der Gruppe bestehend aus Polyethylen, Polypropylen, Ethylen-Vinylacetat, Propylen-Copolymeren, Polysulfonen und Polyamiden (Nylonen).

9. Giessform gemäss einem der vorhergehenden Ansprüche, dadurch gekennzeichnet, dass wenigstens ein Teil der Form (1) aus Metall besteht.

10. Giessform gemäss einem der vorhergehenden Ansprüche, dadurch gekennzeichnet, dass wenigstens ein Teil der Form (1) aus Metallegierungen besteht.

11. Vefahren zur Herstellung einer optischen Linse, umfassend die Stufen: Zurverfügungstellen einer Giessform, einschliessend einen Dorn mit einem rohrförmigen oberen (2) und Bodenteil (3) und einem zubereiteten Element mit einer vorbestimmten Oberfläche, welche den rohrförmigen oberen (2) und Bodenteil (3) voneinander trennt und einen becherförmigen Behälter mit dem rohrförmigen oberen Teil bildet; Einfüllen in den becherförmigen Behälter einer linsenbildenden Flüssigkeit; Polymerisieren der linsenbildenden Flüssigkeit unter Ausbildung einer Rohlinse mit einer optischen Oberfläche, die darauf durch das zubereitete Element ausgebildet ist; und Erzeugen und Ausbilden einer weiteren optischen Oberfläche auf der Rohlinse, dadurch gekennzeichnet, dass der rohrförmige Bodenteil (3) innere Gewindeeinrichtungen (5) zum Befestigen der Giessform auf einem Präzisionsdorn und ein Paar von Präzisionslaschen (6), die damit integriert sind und das Balancieren und Indexieren der Form erleichtert, einschliesst, und dass das Verfahren weiterhin die Stufe einschliesst, die Giessform auf einem mit einem Gewinde versehenen Stab zu befestigen.

12. Verfahren gemäss Anspruch 11, dadurch gekennzeichnet, dass man die anschliessende optische Oberfläche durch Schneiden, Schleifen oder Laserbearbeitung erzeugt und ausbildet.

13. Verfahren gemäss Anspruch 11 oder 12, dadurch gekennzeichnet, dass die optische Linse eine ophthalmische Linse, eine Kontaktlinse, eine intraokulare Linse oder eine Hornhautimplantatlinse ist.

14. Verfahren gemäss einem der Ansprüche 11 bis 13, dadurch gekennzeichnet, dass die linsenbildende Flüssigkeit ausgewählt ist aus der Gruppe, bestehend aus hydrophilen Monomeren, hydrophoben Monomeren, Katalysatoren, Acrylsäureestern, Siliconelastomeren und Zelluloseestern.

15. Verfahren gemäss einem der Ansprüche 11 bis 14, bei dem das Bearbeitungselement aus einem konvexen Polierelement mit einer vorbestimmten Krümmung besteht, dadurch gekennzeichnet, dass man eine Mehrzahl der Giessformen auf ein Gestell stellt, das man jeder der Giessformen mit der linsenbildenden Flüssigkeit füllt, dass man die linsenbildende Flüssigkeit in den Giessformen unter Ausbildung von Linsenrohlingen polymerisiert und härtet, dass man jede der Giessformen auf einem mit einem Gewinde versehenen Präzisionsdorn aufbringt, dass man bei jedem der Linsenrohrlinge eine zweite optische Oberfläche spanabhebend ausbildet und poliert, dass man jede der Giessformen von den Stäben entfernt und zurück aus das Gestell stellt, dass man einen Deckel über das Gestell legt um darin die Giessformen festzuhalten, dass man die bearbeiteten Linsen von den Giessformen abtrennt, dass man den Deckel von dem Gestell entfernt, und dass man die fertiggestellten Linsen untersucht.

16. Verfahren gemäss Anspruch 15, dadurch gekennzeichnet, dass die Linsenform den Linsenrohling während der spanabhebenden Bearbeitung und des Polierens unter Ausbildung der zweiten optischen Oberfläche festhält und dabei geschnitten wird.

**Revendications**

1. Moule de coulée destiné à fabriquer une lentille optique, comprenant une axe qui présente des parties tubulaires supérieure (2) et inférieure (3), et un élément fini (4) possédant une surface prédéterminée qui sépare lesdites parties tubulaires supérieure et inférieure et qui forme un récipient en forme de cuvette en combinaison avec ladite partie tubulaire supérieure, caractérisé en ce que ladite partie tubulaire inférieure (3) comprend un filetage intérieur (5) servant à monter ledit moule de coulée sur un mandrin de précision; et en ce que ladite partie inférieure comprend deux pattes extérieures de précision (6) d'une seule pièce avec elle et destinées à faciliter l'équilibrage et le positionnement du moule.

2. Moule de coulée selon la revendication 1, caractérisé en ce que ladite surface de séparation prédéterminée (4) est convexe.

3. Moule de coulée selon la revendication 1, caractérisé en ce que ladite surface de séparation prédéterminée (4) est concave.

4. Moule de coulée selon la revendication 1, caractérisé en ce que ladite surface de séparation prédéterminée (4) est sphérique.

5. Moule de coulée selon la revendication 1, caractérisé en ce que ladite surface de séparation prédéterminée (4) est torique.

6. Moule de coulée selon la revendication 1, caractérisé en ce que ladite surface de séparation prédéterminée (4) est asphérique.

7. Moule de coulée selon l'une quelconque des revendications précédentes, caractérisé en ce que le moule (1) est fait d'une matière thermoplastique.

8. Moule de coulée selon la revendication 7, caractérisé en ce que ladite matière thermoplasique est choisie dans le groupe composé du polyéthylène, du polypropylène, l'éthylène-acétate de vinyle, des copolymères de propylène, des polysulfones et des nylons.

9. Moule de coulée selon l'une quelconque des revendications précédentes, caractérisé en ce qu'au moins une partie dudit moule (1) est métallique.

10. Moule de coulée selon l'une quelconque des revendications précédentes, caractérisé en ce qu'au moins une partie dudit moule (1) est fait d'alliages métalliques.

11. Procédé de fabrication d'une lentille optique qui comprend les phases consistant à préparer une moule de coulée comprenant une axe qui possède des parties tubulaires supérieure (2) et inférieure (3), et un élément fini présentant une surface prédéterminée qui sépare lesdites parties tubulaires supérieure (2) et inférieure (3) et forme un récipient en forme de cuvette en combinaison avec ladite partie tubulaire supérieure, à remplir ledit récipient en forme de cuvette d'un liquide de formation de lentilles, à polymériser ledit liquide pour former une ébauche de lentille présentant une surface optique moulée par ledit élément fini, et à tailler et finir une autre surface optique dans ladite ébauche de lentille, caractérisé en ce que ladite partie tubulaire inférieure (3) comprend un filetage intérieur (5) servant à monter ledit moule de coulée sur un mandrin de précision, et une paire de pattes de précision (6) venues d'une seule pièce avec elle pour faciliter l'équilibrage et le positionnement du moule, et en ce qu'il comprend en outre les phases consistant à monter ledit moule de coulée sur une tige filetée.

12. Procédé selon la revendication 11, caractérisé en ce qu'on taille et on finit ladite autre surface optique par taillage, meulage ou usinage au laser.

13. Procédé selon la revendication 11 ou 12, caractérisé en ce que la dite lentille optique est une lentille ophthalmique, une lentille de contact, une lentille intraoculaire ou une lentille formant implant cornéen.

14. Procédé selon l'une quelconque des revendications 11 à 13, caractérisé en ce que ledit liquide de formation de lentilles est choisis dans le groupe composé des monomères hydrophiles, des monomères hydrophobes, des catalyseurs, des esters acryliques, des élastomères de silicone et des esters de cellulose.

15. Procédé selon l'une quelconque des revendications 11 à 14, dans lequel ledit élément fini est constitué par un élément poli convexe possédant une courbure prédéterminée, caractérisé en ce que l'on place une pluralité de desdits moules de coulée sur un plateau; on remplit chacun desdits moules de coulée dudit liquide de formation de lentilles, on polymérise et on traite ledit liquide dans lesdits moules de coulée pour former lesdites ébauches de lentilles, en monte chacun desdits moules de coulée sur un mandrin de précision fileté, on monte lesdits moules de coulée avec lesdits mandrins de précision sur un dispositif, on taille et polit mécaniquement une deuxième surface optique sur chacune desdites ébauches de lentille, on enlève chaque moule de coulée desdites tiges et on le replace sur ledit plateau, on place en couvercle sur ledit plateau pour maintenir rigidement les moules de coulée dans ce plateau; on démoule lesdites lentilles finies desdits moules de coulée, on retire ledit couvercle dudit plateau et on contrôle lesdites lentilles finies.

16. Procédé selon la revendication 15, caractérisé en ce que ledit moule à lentilles tient solidement ladite ébauche de lentille pendant le taillage et le polissage mécaniques de la deuxième surface optique sur cette ébauche et qu'il est taillé avec cette ébauche.

0 143 253

Fig.1.

Fig.2.

Fig.3.

Fig.4.

1